# EUROPÄISCHE PATENTSCHRIFT

(11) **EP 2 969 492 B1**
(45) Veröffentlichungstag und Bekanntmachung des Hinweises auf die Patenterteilung: **10.05.2017**
(21) Anmeldenummer: 14711471.4
(22) Anmeldetag: 13.03.2014
(51) Int. Cl.: B29C 70/38, B29C 70/54

(54) **VERFAHREN UND SYSTEME ZUR HERSTELLUNG FORTSCHRITTLICHER VERBUNDBAUTEILE**
METHOD AND SYSTEMS FOR PRODUCING ADVANCED COMPOSITE COMPONENTS
PROCÉDÉ ET SYSTÈMES SERVANT À FABRIQUER DES COMPOSANTS COMPOSITES INNOVANTS

(30) Priorität: 12.03.2013 US 201361777370 P
(43) Veröffentlichungstag der Anmeldung: 20.01.2016
(73) Patentinhaber: Dieffenbacher GmbH Maschinen- und Anlagenbau, 75031 Eppingen (DE)
(72) Erfinder: BORGMANN, Robert E., 75031 Eppingen (DE); BEACHY, Wendell, 75031 Eppingen (DE); EVANS, Don O., 75031 Eppingen (DE); MCCLARD, Christina, 75031 Eppingen (DE)
(86) Internationale Anmeldenummer: PCT/EP2014/054908
(87) Internationale Veröffentlichungsnummer: WO 2014/140146

(56) Entgegenhaltungen:
- DE-A1-102010 044 721
- DE-A1-102011 109 698

## Beschreibung

### HINTERGRUNDINFORMATIONEN

### Gebiet der Erfindung

Die vorliegenden Ausführungsformen beziehen sich im Allgemeinen auf die Herstellung fortschrittlicher Verbundbauteile und insbesondere auf Verfahren und Systeme für die Herstellung fortschrittlicher Verbundbauteile mittels eines automatischen Faserplatzierungsverfahrens, das unidirektionale Prepeg-Verbundmaterialien verwendet. Verfahren und Systeme für die Herstellung von Verbundbauteilen aus Fasern oder Faserbündeln sind beispielsweise aus der DE 10 2011 109 698 A1 bekannt.

### Hintergrund

Herkömmliche Faserplatzierungssysteme werden normalerweise optimiert, um sehr große und oftmals äußerst konturierte Bauteile zu produzieren, die vor dem Aushärten nur einem geringen oder keinem Postforming unterzogen werden. Die sich daraus ergebenden Designkonfigurationen können erhebliche Nachteile darstellen, wenn sie bei der Produktion kleiner, im Wesentlichen flacher Rohlinge eingesetzt werden, wie im Folgenden erklärt:
Mindestlagenlänge (MCL): Herkömmliche Faserplatzierungssysteme legen jede Materiallage mehr oder weniger ununterbrochen auf die Arbeitsfläche auf, indem die Faserbündel von den Materialspulen über einen komplexen Faseranlieferungsweg dem Klemmpunkt einer Walze zugeführt werden, die sich entlang der Arbeitsfläche bewegt. Dies erfordert, dass sich die Vorrichtungen für das Zuschneiden eines jeden Faserbündels auf die geforderte Länge auf der Austragevorrichtung befinden, so nah an der Quetschwalze wie möglich. Der Abstand zwischen der Schneidevorrichtung und dem Klemmpunkt an der Walze legt die Länge des kürzesten Faserbündels, oder der Lage, fest, das bzw. die produziert und gelegt werden kann. Somit erhöht eine längere Mindestlagenlängenabmessung die Abfallmenge, die während des Trimmvorgangs zu entfernen ist. Es kann daher sein, dass die Mindestlagenlänge, die mit der herkömmlichen Faserplatzierungskonfiguration erreicht werden kann, zu lang ist, um für die Produktion kleiner flacher Bauteile geeignet zu sein.

Komplexe Spannungssteuerung: Da herkömmliche Systeme jede Materiallage mehr oder weniger ununterbrochen auf die Arbeitsfläche auflegen, muss jedes Faserbündel zwangsläufig eine erhebliche Strecke von der Materialspule zur Austragevorrichtung zurücklegen, wobei es Belastungen unterworfen ist, die verursacht werden durch das wiederholte Biegen und Verdrehen, das entlang der Strecke erforderlich ist. Weil die Geschwindigkeit des Faserbündels durch das Faseranlieferungssystem der Auflegegeschwindigkeit des Materials auf die Arbeitsfläche entsprechen muss, erfolgen die Zuführung und das Zuschneiden eines jeden Bündels auf die benötigte Länge normalerweise "on the fly". Diese Bedingungen erfordern den Einsatz eines durchdachten und teuren Systems, um die Spannung in jedem einzelnen Faserbündel zu steuern. Die mit einem derartigen Spannungssteuerungssystem verbundenen Kosten machen ein herkömmliches Faserplatzierungssystem als Alternative zum händischen Legen für die Produktion sehr kleiner, im Wesentlichen flacher Bauteile unpraktisch.

Konturierte Legefähigkeit: Die Konfiguration herkömmlicher Faserplatzierungssysteme wird zum Teil durch die Notwendigkeit bestimmt, in der Lage zu sein, eine Materiallage auf Arbeitsflächen aufzulegen, die ziemlich komplexe Konturen aufweisen. Die Anforderung an eine derartige Fähigkeit beeinflusst die Auslegung in vielerlei Hinsicht, was insgesamt zu einer Systemgestaltung führt, die zu komplex und teuer ist, um eine tragbare Alternative zu einem Handlegeverfahren für kleine, im Wesentlichen flache Bauteile zu sein, z. B.:
- Herkömmliche Systeme erfordern normalerweise eine Gestaltung der Austragevorrichtung, die es jedem einzelnen Faserbündel ermöglicht, bei voller Legegeschwindigkeit einzeln ausgegeben zu werden, um besser in der Lage zu sein, den Konturen der Arbeitsoberfläche zu entsprechen;
- Herkömmliche Systeme erfordern normalerweise eine komplexe Gestaltung der Quetschwalze mit ausreichend Nachgiebigkeit, um sich an abrupte, lokale Änderungen bei der Kontur anzupassen;
- Herkömmliche Systeme erfordern normalerweise eine leistungsfähige Wärmequelle für das Verfahren, um bei voller Legegeschwindigkeit die Bauteiloberfläche "on the fly" klebrig zu machen;
- Herkömmliche Systeme erfordern normalerweise einen relativ großen Manipulator mit 6 (und in einigen Fällen 7) Freiheitsgraden, um in der Lage zu sein, eine Materiallage auf die Arbeitsfläche in der richtigen Ausrichtung und Laufbahn aufzulegen, mit ausreichend Gussformfreiraum.

Somit besteht weiterhin ein Bedarf für effizient produzierende fortschrittliche Verbundrohlinge, insbesondere kleine, im Wesentlichen flache fortschrittliche Verbundrohlinge.

### ZUSAMMENFASSUNG

Ausführungsformen bieten Verfahren, Systeme und Geräte für die Herstellung fortschrittlicher Verbundbauteile mittels eines automatischen Faserplatzierungssystems, das gleichgerichtete Prepeg-Verbundmaterialien verwendet. In diesem Dokument beschriebene Ausführungsmaterialien können Hilfsmittel bereitstellen zum effizienten kleiner und im Wesentlichen flacher Endform-Verbundlaminate, welche nach dem Legen bzw. "lay-up" dann nachgeformt und ausgehärtet werden können. Normalerweise werden derartige Bauteile mittels herkömmlicher Handlegemethoden hergestellt. Demgegenüber bieten diese Ausführungsformen ein automatisches Verfahren auf kostengünstige Art und Weise, um die Beständigkeit der Bauteilequalität zu verbessern, Kosten zu senken und die Durchlaufleistung zu steigern. Die Ausführungsformen können für die effiziente Herstellung sowohl duroplastischer als auch thermoplastischer Verbundmaterialien gelten. Allerdings konzentrieren sich die in diesem Dokument ausführlich beschriebenen Ausführungsformen zu Veranschaulichungszwecken auf die gleichgerichteten duroplastischen Prepeg-Verbundmaterialien.

Als eine Ausführungsform wird Verfahren angegeben zur Herstellen von Verbundbauteilen mittels einem Faserplatzierungssystem, welches aufweist: zumindest eine Materiallagereinhausung, welche für jedes pro Lage zu produzierende Faserbündel eine Materialspule, eine drehbare Schwenkwalze und eine Umlenkwalze aufweist; zumindest eine Materialzufuhrstation, welche ein Quetschwalzenantriebssystem und eine Schneidevorrichtung und aufweist; zumindest eine Materialübertragungsstation, welche für jedes pro Lage zu produzierende Faserbündel jeweils eine einzeln bewegliche Führungswanne aufweist, wobei die beweglichen Führungswannen jeweils ein Vakuumsystem aufweisen; und zumindest eine Legestation, welche einen Vakuumtisch oder eine Legefläche und eine mit einem Endeffektor ausgestattete Pick-und-Place-Vorrichtung aufweist; wobei das Verfahren die Schritte aufweist: Aktivieren des Quetschwalzenantriebssystems, um jede der Materialbahnen durch die jeweiligen Schwenkwalzen und Umlenkwalzen zu ziehen, wobei mit dem Ziehen jeder der Materialbahn von ihrer jeweiligen Materialspule durch das Quetschwalzenantriebssystem, jede der Materialbahn vorwärts über die Schneidevorrichtung hinaus und in ihre jeweilige Führungswanne der Materialzufuhrstation geführt wird, nachdem jede Materialbahn über die gewünschte Strecke in ihre jeweilige Führungswanne geführt worden ist, Aktivieren des Vakuumsystems der jeweiligen Führungswanne zum Fixieren der Materialbahn, nach dem Fixieren jeder Materialbahn in ihrer jeweiligen beweglichen Führungswanne, Betätigen der Schneidevorrichtung, um die jeweilige Materialbahn von dem von den Materialanlieferungsspulen zugeführten Material abzutrennen und einzelne Faserbündel zu erstellen, wenn jedes Faserbündel in seiner jeweiligen beweglichen Führungswanne fixiert ist, Bewegen der beweglichen Führungswannen horizontal in Richtung weg von der Schneidevorrichtung, so dass alle Faserbündel für die Pick-und-Place-Vorrichtung zugänglich sind, Rotieren des Endeffektors der Pick-und-Place-Vorrichtung in Ausrichtung mit den beweglichen Führungswannen; Absenken des Endeffektors bis zur Berührung mit den Faserbündeln; Aktivieren des Endeffektors; Deaktivieren des Vakuumsystems in den beweglichen Führungswannen; Zurückziehen des Endeffektors der Pick-und-Place-Vorrichtung, um die Faserbündel von den beweglichen Führungswannen zu entfernen; Positionieren des Endeffektors der Pick-und-Place-Vorrichtung über dem Vakuumtisch oder der Legefläche; Absenken des Endeffektors der Pick-und-Place-Vorrichtung, um die Faserbündel in Berührung mit einer vorher gelegten Schicht auf dem Vakuumtisch oder der Legefläche zu platzieren; und Deaktivieren des Endeffektors der Pick-und-Place-Vorrichtung und Zurückziehen des Endeffektors der Pick-und-Place-Vorrichtung, sodass die Faserbündel oben auf der vorher gelegten Schicht auf dem Vakuumtisch oder der Legefläche in ihrer Position zurückbleiben.

Es kann vorgesehen sein, dass der Endeffektor ein vakuumbetriebener Greifer ist, wobei zum Aktivieren und Deaktivieren des Endeffektors das Vakuum aktiviert beziehungsweise deaktiviert wird.

Vorzugsweise kann, nach dem Absenken des Endeffektors der Pick-und-Place-Vorrichtung, um die Faserbündel in Berührung mit einer vorher gelegten Schicht auf dem Vakuumtisch oder der Legefläche zu platzieren, die Pick-und-Place-Vorrichtung eine nach unten gerichtete Kraft ausüben, um die Faserbündel gegen die vorher gelegte Schicht auf den Vakuumtisch oder die Legefläche zu drücken.

Bevorzugt kann vorgesehen sein, dass bei dem Ziehen jeder der Materialbahn von ihrer jeweiligen Materialspule durch das Quetschwalzenantriebssystem die Materialbahnen jeweils unabhängig voneinander gezogen werden und jede der Materialbahnen über eine Strecke in ihre jeweilige Führungswanne geführt wird, die einer vom Legeprogramm des Bauteils vorgegebenen Faserbündellänge entspricht.

Die Legestation kann bevorzugt weiter ein Heizgerät aufweisen, und das Verfahren kann weiter die Schritte aufweisen: während die Pick-und-Place-Vorrichtung sich in Position über den beweglichen Führungswannen befindet, Positionieren des Heizgeräts über dem Vakuumtisch oder der Legefläche, und Einschalten des Heizgeräts, um die Oberfläche der zuvor gelegten Materialschicht auf dem Vakuumtisch oder der Legefläche zu erwärmen und klebrig zu machen; und nachdem die Oberfläche der vorher gelegten Schicht erwärmt und klebrig gemacht worden ist, Zurückziehen des Heizgeräts von seiner Position über dem Vakuumtisch oder der Legefläche, bevor der vakuumbetriebene Greifer der Pick-und-Place-Vorrichtung über dem Vakuumtisch oder der Legefläche positioniert wird.

Vorzugsweise kann beim Bewegen der beweglichen Führungswannen horizontal in Richtung weg von der Schneidevorrichtung jede bewegliche Führungswanne unabhängig in eine eigenständige Endstellung geführt wird, so dass die Enden eines jeden Faserbündels in einer durchgängigen Beziehung zueinander ausgerichtet sind, so wie sie in dem zu produzierenden Bauteil enthalten sein sollen.

Vorzugsweise können für zumindest eine zu legende Materiallage die Faserbündel in seitlicher Stellung von den angrenzenden Faserbündeln um einen Abstand beabstandet sind, der der Breite eines einzigen Faserbündels entspricht, und wobei die Lücken zwischen den Faserbündeln gefüllt werden durch Legen von Faserbündeln in einer nächsten zu legenden Lage.

Vorzugsweise kann vorgesehen sein, dass für eine erste zu legende Materialschicht die Schritte ausgeführt werden: Legen eines Trägermaterials, insbesondere einer Trägerfolie, auf die Oberfläche des Vakuumtischs und Aktivieren des Vakuumsystems zum Fixieren des Trägermaterials; klebrig Machen der Oberfläche des Trägermaterials zur Vorbereitung der Aufnahme der ersten Materialschicht; Rotieren des Endeffektors der Pick-und-Place-Vorrichtung in Ausrichtung mit den beweglichen Führungswannen; Absenken des Endeffektors bis zur Berührung mit den Faserbündeln; Aktivieren des Endeffektors; Deaktivieren des Vakuumsystems in den beweglichen Führungswannen; Zurückziehen des Endeffektors der Pick-und-Place-Vorrichtung, um die Faserbündel von den beweglichen Führungswannen zu entfernen; Positionieren des Endeffektors der Pick-und-Place-Vorrichtung über dem Vakuumtisch oder der Legefläche; Absenken des Endeffektors der Pick-und-Place-Vorrichtung, um die Faserbündel in Berührung mit dem Trägermaterial auf dem Vakuumtisch oder der Legefläche zu platzieren; Ausüben einer nach unten gerichteten Kraft durch die Pick-und-Place-Vorrichtung, um die Faserbündel gegen das Trägermaterial auf dem Vakuumtisch oder der Legefläche zu drücken; Deaktivieren des Endeffektors der Pick-und-Place-Vorrichtung und Zurückziehen des Endeffektors der Pick-und-Place-Vorrichtung, sodass die Faserbündel auf dem Trägermaterial auf dem Vakuumtisch oder der Legefläche zurückbleiben; und Wiederholen der Schritte, bis die erste Schicht fertiggestellt ist.

Als eine weitere Ausführungsform wird ein Faserplatzierungssystem angegeben, welches aufweist: zumindest eine Materiallagereinhausung, welche für jedes pro Lage zu produzierende Faserbündel eine Materialspule, eine drehbare Schwenkwalze und eine Umlenkwalze aufweist; zumindest eine Materialzufuhrstation, welche ein Quetschwalzenantriebssystem und eine Schneidevorrichtung und aufweist; zumindest eine Materialübertragungsstation, welche für jedes pro Lage zu produzierende Faserbündel jeweils eine einzeln bewegliche Führungswanne aufweist, wobei die beweglichen Führungswannen jeweils ein Vakuumsystem aufweisen; und zumindest eine Legestation, welche einen Vakuumtisch oder eine Legefläche und eine mit einem Endeffektor ausgestattete Pick-und-Place-Vorrichtung aufweist, wobei das Quetschwalzenantriebssystem aktiviert werden kann, um jede der Materialbahnen durch die jeweiligen Schwenkwalzen und Umlenkwalzen zu ziehen, und dabei jede der Materialbahn vorwärts über die Schneidevorrichtung hinaus und in ihre jeweilige Führungswanne der Materialzufuhrstation zu führen, das Vakuumsystem der jeweiligen Führungswannen aktiviert werden kann zum Fixieren der Materialbahn in ihrer jeweiligen beweglichen Führungswanne, die Schneidevorrichtung betätigt werden kann, um die jeweilige Materialbahn von dem von den Materialanlieferungsspulen zugeführten Material abzutrennen und einzelne Faserbündel zu erstellen, die beweglichen Führungswannen horizontal in Richtung weg von der Schneidevorrichtung bewegt werden können, um alle Faserbündel für die Pick-und-Place-Vorrichtung zugänglich zu machen, der Endeffektors der Pick-und-Place-Vorrichtung in Ausrichtung mit den beweglichen Führungswannen rotiert werden, der Endeffektor bis zur Berührung mit den Faserbündeln abgesenkt werden und der Endeffektor aktiviert werden kann, das Vakuumsystems in den beweglichen Führungswannen deaktiviert und der Endeffektors der Pick-und-Place-Vorrichtung zurückgezogen werden kann um die Faserbündel von den beweglichen Führungswannen zu entfernen, der Endeffektor der Pick-und-Place-Vorrichtung über dem Vakuumtisch oder der Legefläche positioniert werden und der Endeffektor der Pick-und-Place-Vorrichtung abgesenkt werden kann, um die Faserbündel in Berührung mit einer vorher gelegten Schicht auf dem Vakuumtisch oder der Legefläche zu platzieren, und der Endeffektor der Pick-und-Place-Vorrichtung deaktiviert und zurückgezogen werden kann, sodass die Faserbündel oben auf der vorher gelegten Schicht auf dem Vakuumtisch oder der Legeoberfläche in ihrer Position zurückgelassen werden können.

Das Faserplatzierungssystem kann bevorzugt eine Faserplatzierungszelle sein oder eine Faserplatzierungszelle umfassen.

Es kann bevorzugt vorgesehen sein, dass die beweglichen Führungswannen unabhängig voneinander in eine eigenständige Endstellung geführt werden können, so dass die Enden eines jeden Faserbündels in einer durchgängigen Beziehung zueinander ausgerichtet werden können, so wie sie in dem zu produzierenden Bauteil enthalten sein sollen.

Es kann bevorzugt auch vorgesehen sein, dass zwischen den beweglichen Führungswannen ein Abstand zueinander ausgebildet ist, der ungefähr dem zweifachen der Breite des im System eingesetzten Materials entspricht.

Weiter bevorzugt kann die Schneidevorrichtung eingerichtet sein, die Materialenden in einem Winkel oder Bogen zu schneiden.

Vorzugsweise kann die Pick-und-Place-Vorrichtung mit einem Werkzeugwechsler ausgestattet sein, welcher es erlaubt, verschiedene Endeffektor zu befestigen, insbesondere einen spezialisierten vakuumbetriebenen Greifer zum Platzieren bestimmter Lagetypen und/oder zum Platzieren einer Lage auf bestimmten Bauteilbereiche, insbesondere einen Bereich, der keine durchgehende Dichte aufweist, einen Greifer zum Entfernen des Bauteil von der Werkzeugoberfläche entfernt, einen Greifer zum Legen eines Trägermaterials auf den Vakuumtisch oder die Legefläche, einen Greifer zum Platzieren von Einsatzstücken oder anderen Materialien, ein Prüfsystem zum Prüfen jeder Schicht für die Qualitätssicherung, und/oder einen Kompaktierungsrahmen, der über das Bauteil und das angelegte Vakuum platziert werden kann, um das Bauteil zusammenzudrücken und den Lufteinschluss zu entfernen.

Weiter bevorzugt kann die Materiallagereinhausung mit einer Kühlanlage ausgestattet ist, um die Materialspulen auf einer vorgegebenen Temperatur und Feuchtigkeit zu halten.

Es kann bevorzugt vorgesehen sein, dass die Materialübertragungsstation weiter zur Bewegung jeder der bewegliche Führungswanne einen jeweiligen servogesteuerten Schubantrieb aufweist.

Die Materialzufuhrstation kann auch gleichzeitig als Materialzuschneidestation verwendet werden.

Andere Systeme, Verfahren, Eigenschaften und Vorteile der Ausführungsformen sind für jeden Fachmann nach Überprüfung der folgenden Figuren und ausführlichen Beschreibung ersichtlich bzw. werden ersichtlich sein. Alle derartigen zusätzlichen Systeme, Verfahren, Eigenschaften und Vorteile sollen in dieser Beschreibung und Zusammenfassung enthalten sein, im Geltungsbereich der Ausführungsformen liegen und durch die Ansprüche geschützt sein.

### KURZE BESCHREIBUNG DER ZEICHNUNGEN

Die Ausführungsformen lassen sich mit Bezugnahme auf die folgenden Zeichnungen und die folgende Beschreibung besser verstehen. Die Bauelemente in den Figuren sind nicht unbedingt maßstabsgetreu, wobei der Schwerpunkt darauf liegt, die Grundsätze der Erfindung zu veranschaulichen. Außerdem bezeichnen gleichartige Bezugszeichen in den Figuren die entsprechenden Bauteile in den verschiedenen Ansichten.
- Fig. 1: ist eine schematische Darstellung einer beispielhaften Faserplatzierungszelle gemäß einer Ausführungsform;
- Fig. 2: ist eine schematische Darstellung beispielhafter Bauelemente einer beispielhaften Materiallagereinhausung gemäß einer Ausführungsform;
- Fig. 3: ist eine schematische Darstellung einer beispielhaften Materialzufuhrstation und einer Umlenkwalzenbaugruppe gemäß einer Ausführungsform;
- Fig. 4: ist eine schematische Darstellung einer Detailansicht der beispielhaften Materialzufuhrstation aus Fig. 3;
- Fig. 5: ist eine schematische Darstellung einer Materialübertragungsstation gemäß einer Ausführungsform;
- Fig. 6A: ist eine schematische Darstellung einer Detailansicht der Materialübertragungsstation aus Fig. 5;
- Fig. 6B: ist eine schematische Abbildung der Materialübertragungsstation aus Fig. 6A, wobei die obere Führungsschiene aus Veranschaulichungszwecken entfernt worden ist;
- Fig. 7: ist eine schematische Darstellung einer beispielhaften Legestation gemäß einer Ausführungsform; und
- Fig. 8 bis 15: sind schematische Darstellung, die einen beispielhaften Betrieb des Systems für die Herstellung fortschrittlicher Verbundbauteile gemäß einer Ausführungsform veranschaulichen.

### DETAILLIERTE BESCHREIBUNG

Ausführungsformen bieten Verfahren, Systeme und Geräte für die Herstellung fortschrittlicher Verbundbauteile mittels eines automatischen Faserplatzierungssystems, das gleichgerichtete Prepreg-Verbundmaterialien verwendet.

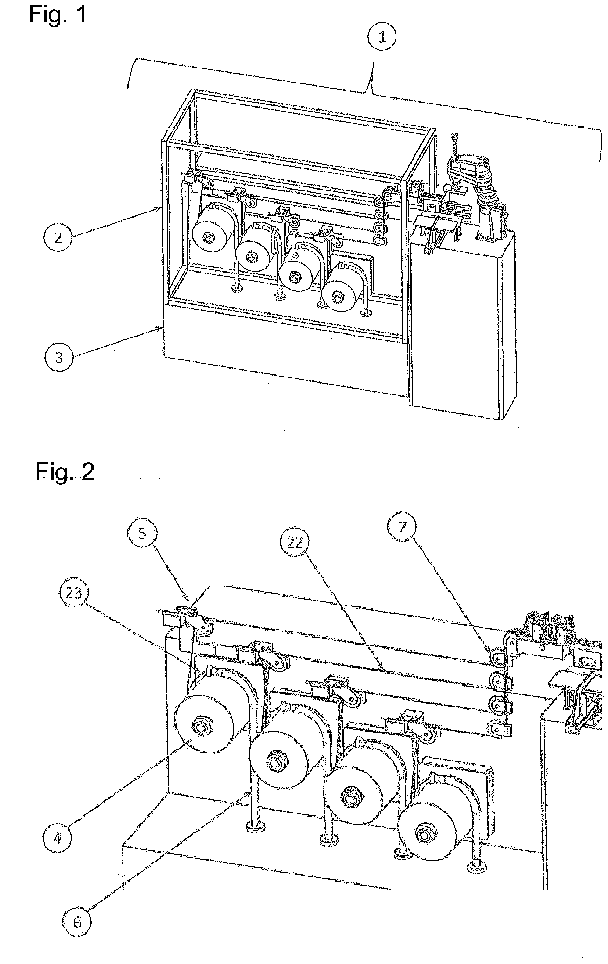

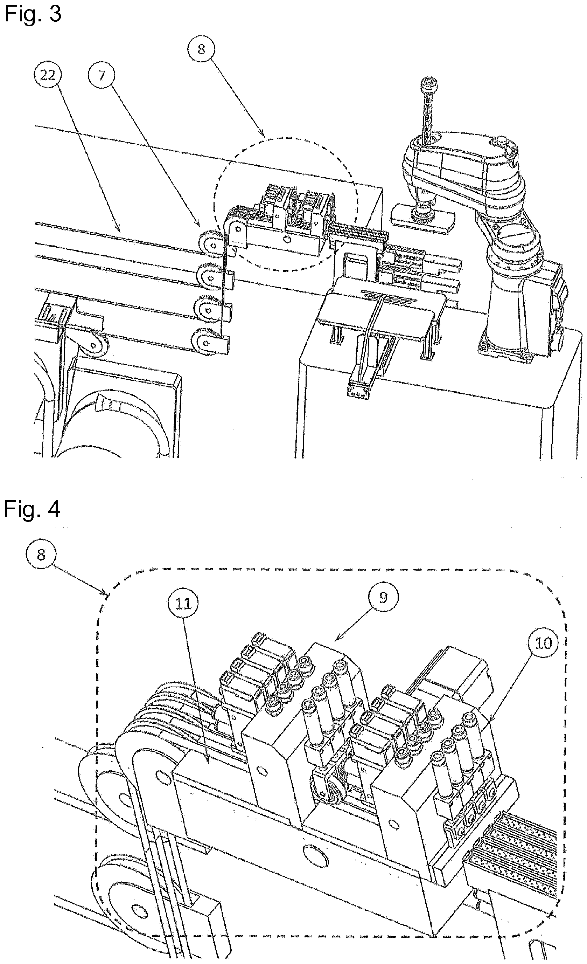

Unter Bezugnahme auf die Figuren 1 bis 15 kann eine Faserplatzierungszelle 1 in Ausführungsformen eine Materiallagereinhausung 2, eine Materialzufuhrstation 8, eine Materialübertragungsstation 12 und eine Legestation 16 umfassen.

Eine Materiallagereinhausung 2 kann über einen an ihr montierten Trägerfolienaufnahmebehälter 3 verfügen. Die Materiallagereinhausung 2 kann eine individuelle Materialspule 4, eine drehbare Schwenkwalze 5, ein Trägerfolienführungsrohr 6 und eine Umlenkwalze 7 für jedes pro Lage zu produzierende Faserbündel umfassen. Jede Materialspulenbaugruppe kann eine Spannvorrichtung zur Fixierung der Materialspule 4 als Unterstützung der Spindel und eine Vorrichtung zur Steuerung der Zugspannung auf dem ausgegebenen Material umfassen. Die Materiallagereinhausung 2 kann mit einer Kühlanlage ausgestattet sein, um die Materialspulen 4 auf optimaler Temperatur und Feuchtigkeit zu halten.

Eine Materialzufuhrstation 8 kann mit einem Quetschwalzenantriebssystem 9, einer Schneidevorrichtung 10 und Materialführungswannen 11 gestaltet werden.

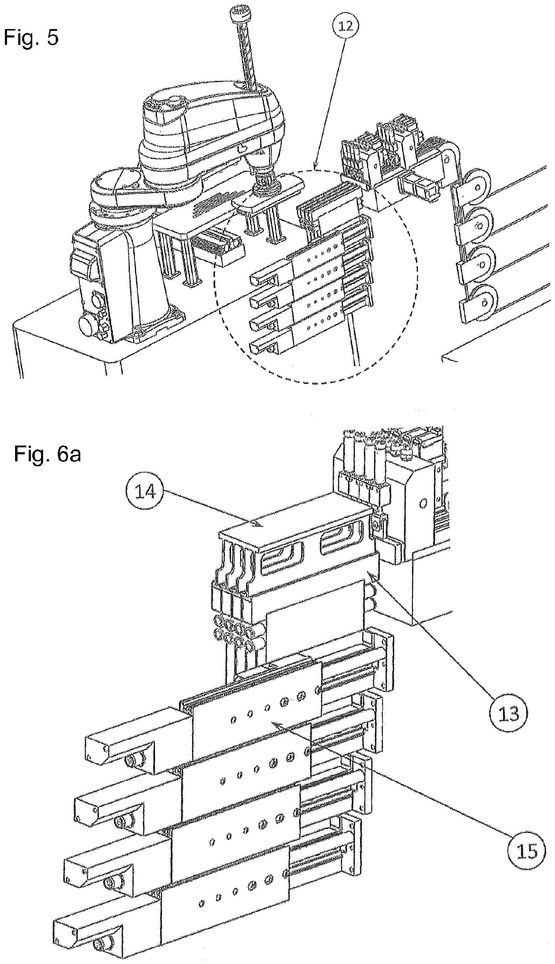

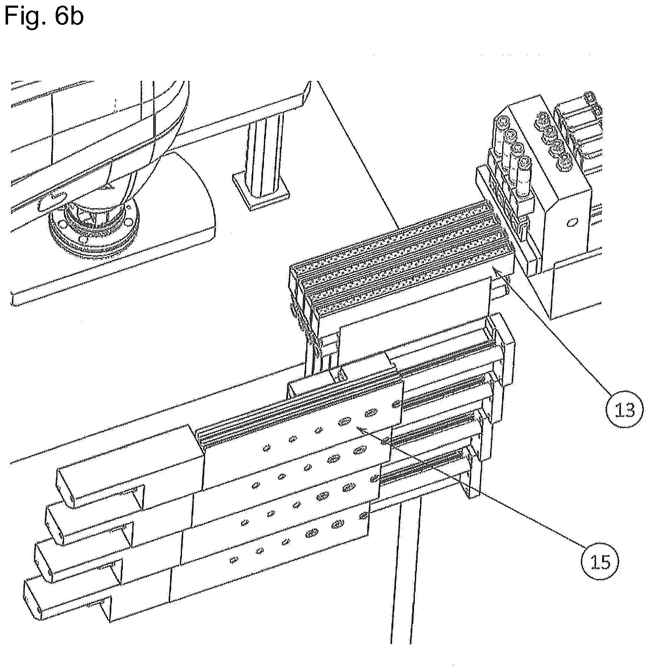

Wie in der Figur 6A am besten zu sehen ist, kann eine Materialübertragungsstation 12 mit einer einzelnen, beweglichen Führungswanne 13, einer oberen Führungsschiene 14 und einem servogesteuerten Schubantrieb 15 für jedes pro Lage zu produzierende Faserbündel gestaltet sein. (Bei einigen der Figuren, z. B. Figur 6B, wird die obere Führungsschiene 14 zu Veranschaulichungszwecken weggelassen). Der seitliche Abstand zwischen den beweglichen Führungswannen 13 zueinander entspricht ungefähr dem zweifachen der Breite des im System eingesetzten Materials. Dieser Abstand kann der Position jedes zweiten Faserbündels in einer vorgegebenen, zu legenden Lage entsprechen. Die beweglichen Führungswannen 13 können mit Vakuumanschlüssen gestaltet werden, um das Material zu fixieren.

Eine Legestation 16 kann eine servogesteuerte Pick-und-Place-Vorrichtung 17, einen Vakuumtisch oder eine Legefläche 18, ein Heizgerät 19 und einen Schubantrieb 20 umfassen. Die Pick-und-Place-Vorrichtung 17 kann mit einem vakuumbetriebenen Greifer 21 ausgestattet sein, der in der letzten Bewegungsachse an ihrem Werkzeugmontageflansch befestigt werden kann. Der vakuumbetriebene Greifer 21 kann mit ausreichender Nachgiebigkeit gestaltet werden, um Material auf die konturierten Oberflächen platzieren zu können.

Obwohl die Figuren Ausführungsformen zeigen, die dafür gestaltet sind, vier Faserbündel pro Lage zu produzieren, kann die Anzahl der pro Lage zu produzierenden Faserbündel variieren und somit so gestaltet werden, um am besten zu den Anwendungsparametern für die bestimmten zu produzierenden Bauteile zu passen.

In Ausführungsformen arbeitet ein beispielhaftes System zur Herstellung kleiner fortschrittlicher Verbundbauteile wie folgt.

Das Quetschwalzenantriebssystem 9 kann aktiviert werden und zieht jede Materialbahn 22 nach vorne durch seine jeweiligen Schwenkwalzen 5 und Umlenkwalzen 7. Jede Materialbahn 22 kann unabhängig gezogen werden, damit die Länge jedes einzelnen Faserbündels variiert, wie vom Legeprogramm des Bauteils vorgegeben.

Mit jeder Materialbahn 22, die von ihrer jeweiligen Materialspule 4 vom Quetschwalzenantriebssystem 9 nach vorne gezogen wird, kann die Trägerfolie 23 auf jeder Materialspule 4 zugleich kontinuierlich abgestreift werden und über das Trägerfolienführungsrohr 6 in den Trägerfolienaufnahmebehälter 3 gezogen werden. Obwohl ein vakuumbetriebenes Trägerfolienentfernungssystem in den Figuren angedeutet ist, kann das Entfernen der Trägerfolie auch erreicht werden, indem die Folie auf eine passive oder angetriebene Aufwickelspule oder jedwedes beliebige geeignete, alternative Hilfsmittel gewickelt wird.

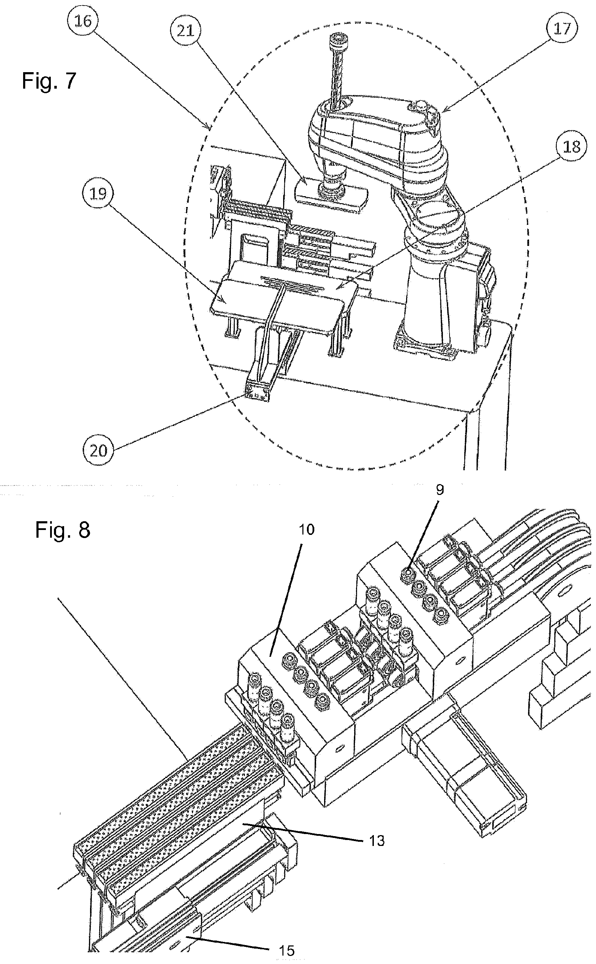

Mit jeder Materialbahn 22, die von ihrer jeweiligen Materialspule 4 vom Quetschwalzenantriebssystem 9 nach vorne gezogen wird, kann jede Bahn zugleich vorwärts über die Schneidevorrichtung 10 hinaus und in ihre jeweilige Führungswanne 13 - die sich in der Materialübestation 8 befindet - geführt werden. Jede Bahn kann die entsprechende Strecke in ihre jeweilige Führungswanne 13 geführt werden, die der gewünschten Faserbündellänge entsprechen kann, wie vom Legeprogramm des Bauteils vorgegeben. Da jede Materialbahn 22 vorwärts in ihre jeweilige Führungswanne 13 geführt wird, läuft sie unter der oberen Führungsschiene 14 durch, die eine Einschließung in vertikaler Richtung bietet, wie z. B. in Figuren 8-9 gezeigt (obere Führungsschiene 14 wird aus Gründen der Übersichtlichkeit nicht gezeigt) dargestellt.

Nachdem jede Materialbahn über die gewünschte Strecke in ihre jeweilige Führungswanne 13 geführt worden ist, kann das Vakuumsystem aktiviert werden, wodurch jede Materialbahn 22 innerhalb ihrer jeweiligen beweglichen Führungswanne 13 fixiert wird.

Wenn jede Materialbahn 22 sicher in ihrer jeweiligen beweglichen Führungswanne 13 fixiert ist, kann die Schneidevorrichtung 10 betätigt werden, die jede Materialbahn 22 von dem von den Materialanlieferungsspulen zugeführten Material abtrennt und somit einzelne Faserbündel 24 erstellt.

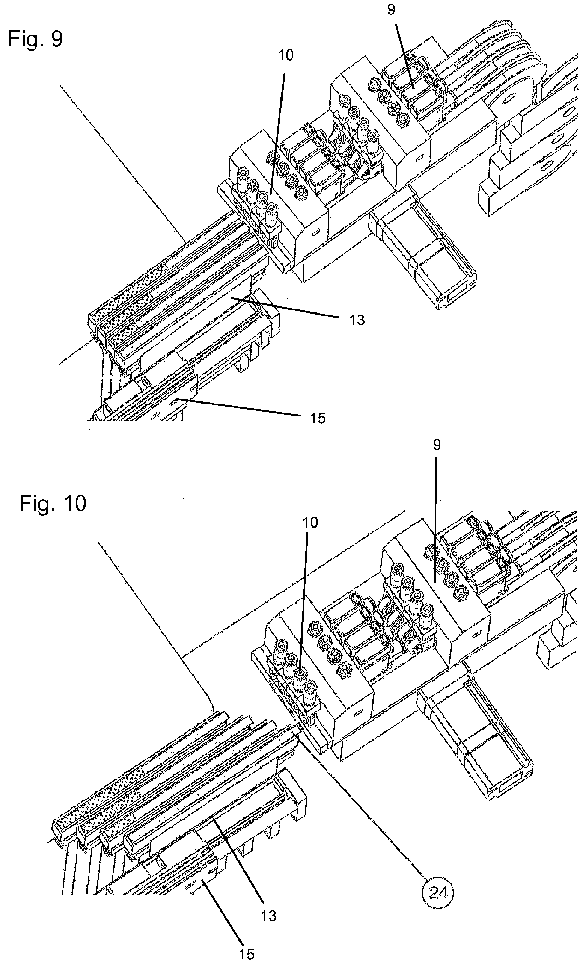

Wenn jedes Faserbündel 24 sicher in seiner jeweiligen beweglichen Führungswanne 13 fixiert ist, können die Schubantriebe 15 betätigt werden und jede bewegliche Führungswanne 13 horizontal bewegen, in die Richtung weg von der Schneidevorrichtung 10, wie z. B. in Figur 10 gezeigt. Jeder Schubantrieb 15 kann seine jeweilige bewegliche Führungswanne 13 unabhängig in eine eigenständige Endstellung führen, damit:
- Alle Faserbündel 24 für die Pick-und-Place-Vorrichtung 17 zugänglich sind;
- Die Enden eines jeden Faserbündels 24 in einer durchgängigen Beziehung zueinander ausgerichtet sind, so wie sie in dem zu produzierenden Bauteil enthalten sein sollen.

Wenn alle Faserbündel 24 sich im richtigen Verhältnis zueinander befinden, kann die Pick-und-Place-Vorrichtung 17 in die Position über den beweglichen Führungswannen 13 fahren und der vakuumbetriebene Greifer 21 kann aktiviert werden.

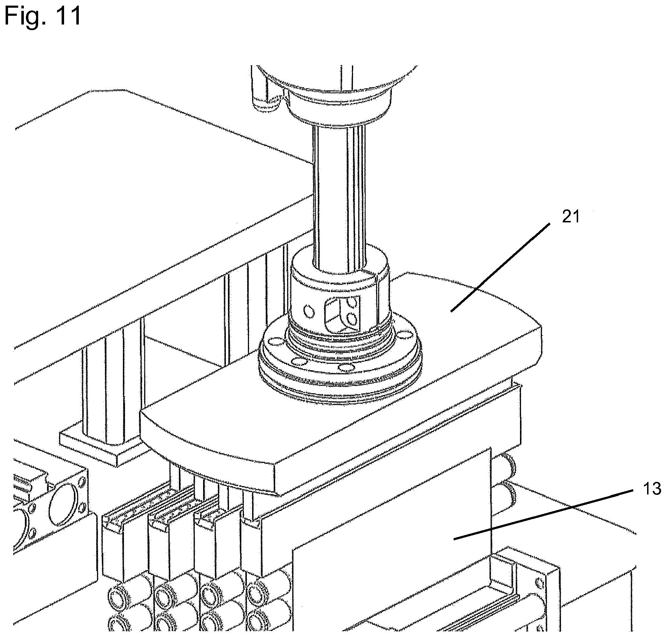

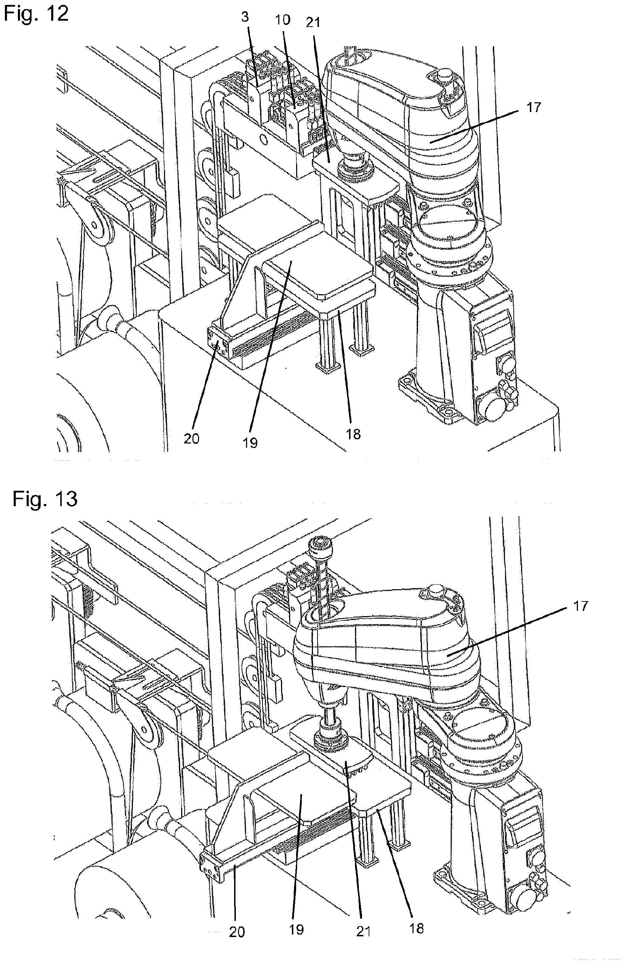

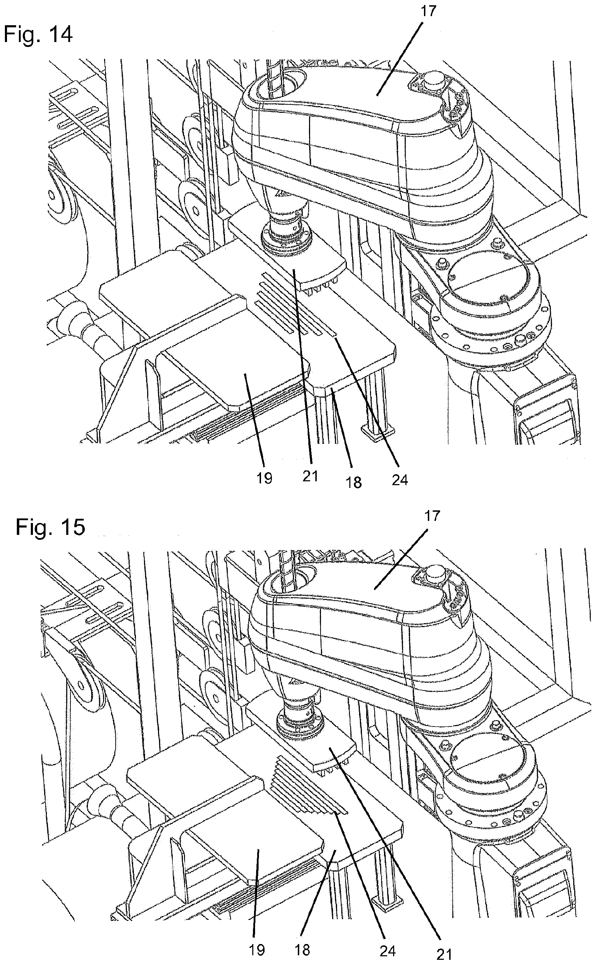

In Ausführungsformen können für die erste zu legende Materialschicht die folgenden Arbeitsabläufe eintreten:
- Eine Trägerfolie kann auf die Oberfläche eines Vakuumtischs oder einer Legefläche 18 gelegt werden und das Vakuumsystem kann aktiviert werden, um sie zu fixieren;
- Die Oberfläche der Trägerfolie kann klebrig gemacht werden, um es für die Aufnahme der ersten Materialschicht vorzubereiten;
- Die Pick-und-Place-Vorrichtung 17 kann den vakuumbetriebenen Greifer 21 in Ausrichtung mit den beweglichen Führungswannen 13 rotieren, ihn zur Berührung mit den Faserbündeln 24 abzusenken (siehe z. B. Figur 11) und sein Vakuum aktivieren;
- Das Vakuumsystem in den beweglichen Führungswannen 13 kann deaktiviert werden und die Pick-und-Place-Vorrichtung 17 kann den vakuumbetriebenen Greifer 21 zurückziehen, um die Faserbündel 24 aus den beweglichen Führungswannen 13 zu entfernen;
- Die Pick-und-Place-Vorrichtung 17 kann den vakuumbetriebenen Greifer 21 in der richtigen Stellung und Ausrichtung über dem Vakuumtisch oder der Legefläche 18 positionieren (siehe z. B. Figur 13);
- Die Pick-und-Place-Vorrichtung 17 kann den vakuumbetriebenen Greifer 21 absenken, um die Faserbündel 24 in Berührung mit der Trägerfolie auf dem Vakuumtisch oder der Legefläche 18 zu platzieren (siehe z. B. Figur 14);
- Die Pick-und-Place-Vorrichtung 17 kann eine leichte nach abwärts gerichtete Kraft ausüben, um die Faserbündel 24 gegen die Trägerfolie auf dem Vakuumtisch oder die Legefläche 18 zu drücken, und der vakuumbetriebene Greifer 21 kann deaktiviert werden;
- Die Pick-und-Place-Vorrichtung 17 kann den vakuumbetriebenen Greifer 21 zurückziehen, wodurch die Faserbündel 24 auf dem Vakuumtisch oder der Legefläche 18 zurückbleiben; und
- Die Pick-und-Place-Vorrichtung 17 kann weiterhin Materiallagen in der oben beschriebenen Art und Weise legen, bis die erste Bauteilschicht fertiggestellt worden ist.

In Ausführungsformen können für nachfolgende, zu legende Materialbahnen die folgenden Arbeitsabläufe eintreten:
- Die Pick-und-Place-Vorrichtung 17 kann den vakuumbetriebenen Greifer 21 in Ausrichtung mit den beweglichen Führungswannen 13 rotieren, ihn zur Berührung mit den Faserbündeln 24 abzusenken (siehe z. B. Figur 11) und sein Vakuum aktivieren;
- Während die Pick-und-Place-Vorrichtung 17 sich in Position über den beweglichen Führungswannen 13 befinden, kann der Schubantrieb 20 aktiviert und das Heizgerät 19 in Position über dem Vakuumtisch oder der Legefläche 18 gefahren werden (siehe z. B. Figur 12);
- Das Heizgerät 19 kann eingeschaltet werden, um die Oberfläche der vorher gelegten Materialschicht auf dem Vakuumtisch oder der Legefläche 18 zu wärmen und klebrig zu machen (obwohl ein Heißluftheizsystem in den Konzeptabbildungen angedeutet sind, kann der Heizvorgang mittels einer IR-Quelle oder eines beliebigen alternativen Hilfsmittels durchgeführt werden);
- Das Vakuumsystem in den beweglichen Führungswannen 13 kann deaktiviert werden und die Pick-und-Place-Vorrichtung 17 kann den vakuumbetriebenen Greifer 21 zurückziehen, um die Faserbündel 24 von den beweglichen Führungswannen 13 zu entfernen;
- Wenn die Oberfläche der vorher gelegten Schicht gewärmt und klebrig gemacht worden ist, kann der Schubantrieb 20 wieder aktiviert werden und das Heizgerät 19 von seiner vorherigen Position über dem Vakuumtisch oder der Legefläche 18 zurückziehen (siehe z. B. Figur 13);
- Die Pick-und-Place-Vorrichtung 17 kann den vakuumbetriebenen Greifer 21 in der richtigen Stellung und Ausrichtung über dem Vakuumtisch oder der Legefläche 18 positionieren;
- Die Pick-und-Place-Vorrichtung 17 kann den vakuumbetriebenen Greifer 21 absenken, um die Faserbündel 24 in Berührung mit der vorher gelegten Schicht auf dem Vakuumtisch oder der Legefläche 18 zu platzieren;
- Die Pick-und-Place-Vorrichtung 17 kann eine leichte nach abwärts gerichtete Kraft ausüben, um die Faserbündel 24 gegen die vorher gelegte Schicht auf den Vakuumtisch oder die Legefläche 18 zu drücken;
- Das Vakuum des vakuumbetriebenen Greifers 21 kann deaktiviert werden und die Pick-und-Place-Vorrichtung 17 kann den Greifer zurückziehen, wodurch die Faserbündel 24 oben auf der vorher gelegten Schicht auf dem Vakuumtisch oder der Legefläche 18 in ihrer Position zurückbleiben (siehe z. B. Figur 15); und
- Die Pick-und-Place-Vorrichtung 17 kann weiterhin nachfolgende Materiallagen auf die oben beschrieben Art und Weise legen, bis alle Schichten des Bauteils fertiggestellt worden sind.

In den oben beschriebenen Ausführungsformen kann jede mittels der obigen Methoden gelegte Materiallage jede zweite Faserbündelposition umfassen, d. h. jedes Faserbündel in einem beliebigen Lauf kann in seitlicher Stellung von den angrenzenden Faserbündel um den Abstand, der der Breite eines einzigen Faserbündels entspricht, abgesetzt werden (siehe z. B. Figur 14). Die nächste produzierte Lage kann dann diejenigen Faserbündel umfassen, die zum Füllen der Lücken zwischen den Faserbündeln in der vorher gelegten Lage erforderlich sind (siehe z. B. Figur 15).

Im Vergleich zu herkömmlichen Faserplatzierungssystemen, die dieselbe Breite und Anzahl an Materiallagen verwenden, kann jede mittels der oben beschriebenen Ausführungsformen produzierte Lage 2x die Breite der von einem herkömmlichen System produzierten Lage haben; allerdings kann die tatsächliche Nettofläche des auf der Legeoberfläche platzierten Materials ähnlich oder identisch sein.

### Alternative Ausführungsformen

Viele Variationen der oben beschriebenen Ausführungsformen werden auch in Erwägung gezogen.

Erstens, während die oben beschriebenen Ausführungsformen für das Herstellen kleiner Bauteile gestaltet sein können, sind die Ausführungsformen nicht auf eine bestimmte Größe beschränkt. Andere Ausführungsformen können gestaltet werden, um größere Bauteile herzustellen.

Zweitens können Ausführungsformen jede beliebige Pick-und-Place-Vorrichtung verwenden. Ein industrieller Pick-und-Place-Roboter kann eine beliebige Anzahl an Pick-und-Place-Ausführungen umfassen. Ausführungsformen können jedwede Hilfsmittel umfassen, um die Faserbündel von den Führungswannen 13 zu entfernen und sie auf einem herzustellenden Bauteil abzusetzen.

Außerdem sind die Ausführungsformen auf jede beliebige Bandbreite anwendbar und sind nicht auf schmale Bandbreiten beschränkt. Ausführungsformen können Konfigurationen verwenden, die den in diesem Dokument offengelegten Ausführungen ähnlich sind, um Bauteile mit einem breiteren Band herzustellen.

Des Weiteren kann die Schneidevorrichtung so gestaltet werden, um die Materialenden in einem Winkel oder Bogen zu schneiden, damit Bauteile mit weniger Kantenabfall entstehen.

Ferner kann ein System mehr als eine Materiallagereinhausung 2, Materialzufuhrstation 8, eine Materialübertragungsstation 12, eine Legestation 16 oder darin enthaltene Elemente umfassen, um die Geschwindigkeit und Produktivität zu steigern. So kann eine Maschine zum Beispiel mit zwei Materiallagereinhausungen 2 und Materialzufuhrstationen 8 gestaltet werden, damit das Pick-und-Place-System 17 Material aus einem System ziehen kann, während das nächste Material zugeführt wird. Jede Materiallagereinhausung 2 kann aber auch so eingerichtet werden, um unterschiedliche Bandbreiten zu verarbeiten, damit in einem einzigen Bauteil zwei Bandbreiten verwendet werden können.

Zusätzlich können in Situationen, in denen ein Bauteil während dem Legen kompaktiert werden muss, mehrere Werkzeugoberflächen enthalten sein, damit die Pick-und-Place-Vorrichtung 17 Material auf das zweite Bauteil setzen kann, während das erste Bauteil kompaktiert wird.

Überdies kann die Pick-und-Place-Vorrichtung 17 mit einem Werkzeugwechsler gestaltet werden, damit der vakuumbetriebene Greifer 21 von der Pick-und-Place-Vorrichtung 17 entfernt werden kann und andere Endeffektoren befestigt werden können. Das Montagesystem kann zum Beispiel eine Vakuumspannvorrichtung sein. Bei anderen Endeffektoren kann es sich um spezialisierte vakuumbetriebene Greifer handeln, die bestimmte Lagetypen platzieren sollen oder Lage auf bestimmten Bauteilbereiche platzieren soll, z. B. einen Bereich, der keine durchgehende Dichte aufweist.
- Ein Greifer, der das Bauteil von der Werkzeugoberfläche entfernt;
- Ein Greifer, der ein Trägermaterial auf der Werkzeugoberfläche platziert, auf die das Bauteil gelegt wird;
- Ein Greifer, der Einsatzstücke oder andere Materialien gemäß den Anforderungen der Bauteilauslegung platziert (ein Beispiel für ein derartiges Einsatzstück wäre eine Glasgewebefaser-Isolationsschicht, die auf den beiden Außenflächen des Bauteils platziert wird);
- Ein Prüfsystem, das jede Schicht für die Qualitätssicherung prüft;
- Ein Kompaktierungsrahmen, der über das Bauteil und das angelegte Vakuum platziert werden kann, um das Bauteil zusammenzudrücken und den Lufteinschluss zu entfernen.

Anstatt das Material direkt auf den Vakuumtisch zu legen kann ein Trägermaterial auch mit Hilfe eines Vakuums oder anderen Hilfsmittels auf der Werkzeugoberfläche (z. B. einer Polymerfolie) fixiert werden. Die erste Schicht des Bauteils kann mittels einer geeigneten Methode, z. B. Wärme, Klebrigmacher oder Druck, auf das Trägermaterial geklebt werden.

Weiterhin können Ausführungsformen ein nicht flaches Bauteil produzieren. Während die oben beschriebenen Ausführungsformen eine flache Werkzeugoberfläche verwenden, können gebogene Bauteile auch unter Verwendung eines Greifers 21, mittels dessen sich das Band an das nicht flache Bauteil anpassen könnte, gelegt werden. Eine einfache Krümmung kann eine kompatible Greiferoberfläche umfassen, die zu der Bauteilform passen kann, während die Faserbündel auf die Werkzeugoberfläche gepresst werden. Bei komplexeren Formen können durchdachtere Greifer zum Einsatz kommen, die die flachen Faserbündel in die endgültige Bauteilform biegen bzw. betätigt werden, um die Faserbündel zur endgültigen Bauteilform umzuformen.

Zudem können die oben beschriebenen Ausführungsformen auch auf das Legen thermoplastischer Prepeg-Verbundmaterialien angewandt werden. In einer thermoplastischen Ausführung muss die Materiallagereinhausung 2 möglicherweise nicht gekühlt werden und kann auf den Trägerfolienaufnahmebehälter 3 verzichten. Es können alternative Heizmethoden, z. B. Laser, Heizgas, IR oder Erwärmung durch Ultraschall, eingesetzt werden, um das Material schnell auf eine Temperatur zu erwärmen, bei der die Schichten während dem Legen aneinander anhaften würden. Anstatt die Oberfläche des bereits gelegten Materials zu erwärmen, um die Haftung an der nächsten Materiallage zu unterstützen, kann die Pick-und-Place-Vorrichtung 17 oder der vakuumbetriebene Greifer 21 zusätzlich Ultraschallschweißgeräte umfassen, um die gelegte Lage an die darunterliegenden Schichten schweißen. Ausführungsformen geeigneter Schweißmethoden werden im US-Patent Nr. 8,043,253 offengelegt, das im vorliegenden Dokument durch Bezugnahme vollständig aufgenommen ist.

Außerdem können die vorliegenden Ausführungsformen zur Herstellung kleiner fortschrittlicher Verbundbauteile mit anderen Legemethoden verbunden werden, in den Fällen, in denen ein Hybridverfahren für eine bestimmte Bauteilgeometrie vorteilhaft wäre. Zum Beispiel können für Bauteile, die ein größeres Längen-Breiten-Seitenverhältnis haben, - in Fällen, in denen Schichten, deren Lagen parallel zur langen Kante des Bauteils laufen, viel länger sind als die Schichten, deren Lagen in einem Winkel zur langen Kante laufen - die lange Lagen mit einem anderen Hilfsmittel platziert werden. Zu den alternativen Hilfsmittel gehören unter anderem das händische Legen ("Hand-Lay-Up") von vorgeschnittenen Bandmaterialschichten für lange Lagen, bei der die Pick-und-Place-Vorrichtung 17 verwendet wird, um lange Streifen mit einem entsprechenden vakuumbetriebenen Greifer 21 zu platzieren oder bei der das Band mit einem verfahrbaren Kopf für lange Lage platziert wird.

Die vorliegenden Ausführungsformen können zu mehreren überraschenden und nützlichen Ergebnissen führen.

Ersten können bei Ausführungsformen, die dafür gestaltet sind, um eher vorgeschnittene Faserbündel zu platzieren als sie ohne Vorbereitung zuzuführen und zu schneiden, die beschränkten Platzverhältnisse der Platzierung der Schneidevorrichtung gelockert sein, wodurch es dem System ermöglicht wird, eine sehr kurze Mindestlagelänge (MCL) zu verwenden. Die erzeugte Abfallmenge kann verringert werden, wodurch dies somit eine tragbare Alternative zum händischen Legeverfahren für kleine Bauteile bietet.

Zweitens kann bei Ausführungsformen, die dafür gestaltet sind, um eher vorgeschnittene Faserbündel zu platzieren als sie ohne Vorbereitung zuzuführen und zu schneiden, die Notwendigkeit für ein teures und durchdachtes Spannungssteuerungsystem ausgeschlossen werden, wodurch sich die Kosten des Systems gemäß den vorliegenden Ausführungsformen verringern.

Ferner kann bei Ausführungsformen, die mit einer ortsfesten Materiallagereinhausung und einer ortfesten Zufuhr-/Schneidestation gestaltet sind, die Notwendigkeit für ein komplexes und teures Faseranlieferungssystems ausgeschlossen werden, zusammen mit einem Großteil der Beanspruchung des Materials durch das mit derartigen Systemen verbundene Biegen und Verdrehen.

Zusätzlich kann bei Ausführungsformen, die mit einer ortsfesten Materiallagereinhausung und einer ortfesten Zufuhr-/Schneidestation gestaltet sind, der größte Teil der Materialführung von einer gekühlten Einhausung umschlossen sein, wodurch die Klebrigkeit des Materials und somit die Menge des auf die Bauteile im gesamten System übertragenen Harzes verringert wird. Dies bietet die Möglichkeit, die Häufigkeit der Reinigungsarbeiten unter gleichzeitiger Verbesserung der Zuverlässigkeit des Systems zu verringern.

Des Weiteren können bei Ausführungsformen, die gestaltet sind, um vorgeschnittene Faserbündel auf einer flachen Legeoberfläche zu platzieren, die Größe, Komplexität und somit die Kosten eines für das System geeigneten Manipulators deutlich reduziert werden.

Schließlich kann bei Ausführungsformen, die gestaltet sind, um vorgeschnittene Faserbündel auf einer flachen Legeoberfläche zu platzieren, die Notwendigkeit ausgeschlossen werden, die vorher gelegten Schichten ohne Vorbereitung zu erwärmen/klebrig zu machen. Eine geringere Kapazität und somit ein günstigeres Heizsystem können ohne die Notwendigkeit von ausgeklügelten Steuermechanismen eingesetzt werden.

Die obige Offenbarung der Ausführungsformen wurde für Zwecke der Veranschaulichung und Beschreibung dargestellt. Sie soll nicht erschöpfend sein oder andere Ausführungsformen zur den offengelegten präzisen Formen einschränken. Viele Abweichungen von und Abänderungen der in diesem Dokument beschriebenen Ausführungsformen werden für einen Fachmann angesichts der obigen Offenlegung offensichtlich sein. Der Geltungsbereich der Ausführungsformen ist nur von den Ansprüchen und ihren Entsprechungen festzulegen.

### Bezugszeichenliste P0160WO

- 1: Faserplatzierungszelle
- 2: Materiallagereinhausung
- 3: Trägerfolienaufnahmebehälter
- 4: Materialspule
- 5: Schwenkwalze
- 6: Trägerfolienführungsrohr
- 7: Umlenkwalze
- 8: Materialzufuhrstation
- 9: Quetschwalzenantriebssystem
- 10: Schneidvorrichtung
- 11: Materialführungswanne
- 12: Materialübertragungsstation
- 13: Führungswanne
- 14: Führungsschiene
- 15: Schubantrieb
- 16: Legestation
- 17: Pick-und-Place-Vorrichtung
- 18: Legefläche
- 19: Heizgerät
- 20: Schubantrieb
- 21: Greifer
- 22: Materialbahn
- 23: Trägerfolie
- 24: Faserbündel

## Patentansprüche

1. Verfahren zur Herstellen von Verbundbauteilen mittels einem Faserplatzierungssystem, welches aufweist:
zumindest eine Materiallagereinhausung (2), welche für jedes pro Lage zu produzierende Faserbündel (24) zumindest eine Materialspule (4), eine drehbare Schwenkwalze (5) und eine Umlenkwalze (7) aufweist;
zumindest eine Materialzufuhrstation (8), welche ein Quetschwalzenantriebssystem (9) und eine Schneidevorrichtung (10) und aufweist;
zumindest eine Materialübertragungsstation (12), welche für jedes pro Lage zu produzierende Faserbündel (24) jeweils eine bewegliche Führungswanne (13) aufweist, wobei die beweglichen Führungswannen (13) jeweils ein Vakuumsystem aufweisen; und
zumindest eine Legestation (16), welche einen Vakuumtisch oder Legefläche (18) und eine mit einem Endeffektor ausgestattete Pick-und-Place-Vorrichtung (17) aufweist;
wobei das Verfahren die Schritte aufweist:
Aktivieren des Quetschwalzenantriebssystems (9), um jede der Materialbahnen (22) durch die jeweiligen Schwenkwalzen (5) und Umlenkwalzen (7) zu ziehen,
wobei mit dem Ziehen jeder der Materialbahn (22) von ihrer jeweiligen Materialspule (4) durch das Quetschwalzenantriebssystem (9), jede der Materialbahn (22) vorwärts über die Schneidevorrichtung (10) hinaus und in ihre jeweilige Führungswanne (13) der Materialzufuhrstation (8) geführt wird, nachdem jede Materialbahn (22) über die gewünschte Strecke in ihre jeweilige Führungswanne (13) geführt worden ist, Aktivieren des Vakuumsystems der jeweiligen Führungswanne (13) zum Fixieren der Materialbahn (22),
nach dem Fixieren jeder Materialbahn (22) in ihrer jeweiligen beweglichen Führungswanne (13), Betätigen der Schneidevorrichtung (10), um die jeweilige Materialbahn (22) von dem von den Materialanlieferungsspulen zugeführten Material abzutrennen und einzelne Faserbündel (24) zu erstellen, wenn jedes Faserbündel (24) in seiner jeweiligen beweglichen Führungswanne (13) fixiert ist, Bewegen der beweglichen Führungswannen (13) horizontal in Richtung weg von der Schneidevorrichtung (10), so dass alle Faserbündel (24) für die Pick-und-Place-Vorrichtung (17) zugänglich sind, Rotieren des Endeffektors der Pick-und-Place-Vorrichtung (17) in Ausrichtung mit den beweglichen Führungswannen (13);
Absenken des Endeffektors bis zur Berührung mit den Faserbündeln (24); Aktivieren des Endeffektors;
Deaktivieren des Vakuumsystems in den beweglichen Führungswannen (13); Zurückziehen des Endeffektors der Pick-und-Place-Vorrichtung (17), um die Faserbündel (24) von den beweglichen Führungswannen (13) zu entfernen;
Positionieren des Endeffektors der Pick-und-Place-Vorrichtung (17) über dem Vakuumtisch oder der Legefläche (18);
Absenken des Endeffektors der Pick-und-Place-Vorrichtung (17), um die Faserbündel (24) in Berührung mit einer vorher gelegten Schicht auf dem Vakuumtisch oder der Legefläche (18) zu platzieren; und
Deaktivieren des Endeffektors der Pick-und-Place-Vorrichtung (17) und Zurückziehen des Endeffektors der Pick-und-Place-Vorrichtung (17), sodass die Faserbündel (24) oben auf der vorher gelegten Schicht auf dem Vakuumtisch oder der Legefläche (18) in ihrer Position zurückbleiben.

2. Verfahren nach Anspruch 1, wobei der Endeffektor ein vakuumbetriebener Greifer (21) ist, und wobei zum Aktivieren und Deaktivieren des Endeffektors das Vakuum aktiviert beziehungsweise deaktiviert wird.

3. Verfahren nach einem der Ansprüche 1 oder 2, wobei nach dem Absenken des Endeffektors der Pick-und-Place-Vorrichtung (17), um die Faserbündel (24) in Berührung mit einer vorher gelegten Schicht auf dem Vakuumtisch oder der Legefläche (18) zu platzieren, die Pick-und-Place-Vorrichtung (17) eine nach unten gerichtete Kraft ausübt, um die Faserbündel (24) gegen die vorher gelegte Schicht auf den Vakuumtisch oder die Legefläche (18) zu drücken.

4. Verfahren nach einem der Ansprüche 1 bis 3, wobei mit dem Ziehen jeder der Materialbahn (22) von ihrer jeweiligen Materialspule (4) durch das Quetschwalzenantriebssystem (9) die Materialbahnen (22) jeweils unabhängig voneinander gezogen werde und jede der Materialbahnen (22) über eine Strecke in ihre jeweilige Führungswanne (13) geführt wird, die einer vom Legeprogramm des Bauteils vorgegebenen Faserbündellänge entspricht.

5. Verfahren nach einem der Ansprüche 1 bis 4, wobei die Legestation (16) weiter ein Heizgerät (19) aufweist, und wobei das Verfahren weiter die Schritte aufweist:
während die Pick-und-Place-Vorrichtung (17) sich in Position über den beweglichen Führungswannen (13) befindet, Positionieren des Heizgeräts (19) über dem Vakuumtisch oder der Legefläche (18), und Einschalten des Heizgeräts (19), um die Oberfläche der zuvor gelegten Materialschicht auf dem Vakuumtisch oder der Legefläche (18) zu erwärmen und klebrig zu machen; und
nachdem die Oberfläche der vorher gelegten Schicht erwärmt und klebrig gemacht worden ist, Zurückziehen des Heizgeräts (19) von seiner Position über dem Vakuumtisch oder der Legefläche (18), bevor der vakuumbetriebene Greifer (21) der Pick-und-Place-Vorrichtung (17) über dem Vakuumtisch oder der Legefläche (18) positioniert wird.

6. Verfahren nach einem der Ansprüche 1 bis 5, wobei beim Bewegen der beweglichen Führungswannen (13) horizontal in Richtung weg von der Schneidevorrichtung (10) jede bewegliche Führungswanne (13) unabhängig in eine eigenständige Endstellung geführt wird, so dass die Enden eines jeden Faserbündels (24) in einer durchgängigen Beziehung zueinander ausgerichtet sind, so wie sie in dem zu produzierenden Bauteil enthalten sein sollen.

7. Verfahren nach einem der Ansprüche 1 bis 6, wobei für zumindest eine zu legende Materiallage die Faserbündel (24) in seitlicher Stellung von den angrenzenden Faserbündeln (24) um einen Abstand beabstandet sind, der der Breite eines einzigen Faserbündels entspricht, und wobei die Lücken zwischen den Faserbündeln (24) gefüllt werden durch Legen von Faserbündeln (24) in einer nächsten zu legenden Lage.

8. Verfahren nach einem der Ansprüche 1 bis 7, wobei für eine erste zu legende Materialschicht die Schritte ausgeführt werden:
Legen eines Trägermaterials, insbesondere einer Trägerfolie, auf die Oberfläche des Vakuumtischs oder der Legefläche (18) und Aktivieren des Vakuumsystems zum Fixieren des Trägermaterials;
klebrig Machen der Oberfläche des Trägermaterials zur Vorbereitung der Aufnahme der ersten Materialschicht;
Rotieren des Endeffektors der Pick-und-Place-Vorrichtung (17) in Ausrichtung mit den beweglichen Führungswannen (13);
Absenken des Endeffektors bis zur Berührung mit den Faserbündeln (24); Aktivieren des Endeffektors;
Deaktivieren des Vakuumsystems in den beweglichen Führungswannen (13); Zurückziehen des Endeffektors der Pick-und-Place-Vorrichtung (17), um die Faserbündel (24) von den beweglichen Führungswannen (13) zu entfernen;
Positionieren des Endeffektors der Pick-und-Place-Vorrichtung (17) über dem Vakuumtisch oder der Legefläche (18);
Absenken des Endeffektors der Pick-und-Place-Vorrichtung (17), um die Faserbündel (24) in Berührung mit dem Trägermaterial auf dem Vakuumtisch oder der Legefläche (18) zu platzieren;
Ausüben einer nach unten gerichteten Kraft durch die Pick-und-Place-Vorrichtung (17), um die Faserbündel (24) gegen das Trägermaterial auf dem Vakuumtisch oder der Legefläche (18) zu drücken;
Deaktivieren des Endeffektors der Pick-und-Place-Vorrichtung (17) und Zurückziehen des Endeffektors der Pick-und-Place-Vorrichtung (17), sodass die Faserbündel (24) auf dem Trägermaterial auf dem Vakuumtisch oder der Legefläche (18) zurückbleiben; und
Wiederholen der Schritte, bis die erste Schicht fertiggestellt ist.

9. Faserplatzierungssystem, aufweisend:
zumindest eine Materiallagereinhausung (2), welche für jedes pro Lage zu produzierende Faserbündel (24) eine Materialspule (4), eine drehbare Schwenkwalze (5) und eine Umlenkwalze (7) aufweist;
zumindest eine Materialzufuhrstation (8), welche ein Quetschwalzenantriebssystem (9) und eine Schneidevorrichtung (10) und aufweist;
zumindest eine Materialübertragungsstation (12), welche für jedes pro Lage zu produzierende Faserbündel jeweils eine bewegliche Führungswanne (13) aufweist, wobei die beweglichen Führungswannen (13) jeweils ein Vakuumsystem aufweisen; und
zumindest eine Legestation (16), welche einen Vakuumtisch oder eine Legefläche (18) und eine mit einem Endeffektor ausgestattete Pick-und-Place-Vorrichtung (17) aufweist, wobei
das Quetschwalzenantriebssystem (9) aktiviert werden kann, um jede der Materialbahnen (22) durch die jeweiligen Schwenkwalzen (5) und
Umlenkwalzen (7) zu ziehen, und dabei jede der Materialbahn (22) vorwärts über die Schneidevorrichtung (10) hinaus und in ihre jeweilige Führungswanne (13) der Materialzufuhrstation (8) zu führen,
das Vakuumsystem der jeweiligen Führungswannen (13) aktiviert werden kann zum Fixieren der Materialbahn (22) in ihrer jeweiligen beweglichen Führungswanne (13),
die Schneidevorrichtung (10) betätigt werden kann, um die jeweilige Materialbahn (22) von dem von den Materialanlieferungsspulen zugeführten Material abzutrennen und einzelne Faserbündel (24) zu erstellen,
die beweglichen Führungswannen (13) horizontal in Richtung weg von der Schneidevorrichtung (10) bewegt werden können, um alle Faserbündel (24) für die Pick-und-Place-Vorrichtung (17) zugänglich zu machen,
der Endeffektors der Pick-und-Place-Vorrichtung (17) in Ausrichtung mit den beweglichen Führungswannen (13) rotiert werden, der Endeffektor bis zur Berührung mit den Faserbündeln (24) abgesenkt werden und der Endeffektor aktiviert werden kann,
das Vakuumsystems in den beweglichen Führungswannen (13) deaktiviert und der Endeffektors der Pick-und-Place-Vorrichtung (17) zurückgezogen werden kann um die Faserbündel (24) von den beweglichen Führungswannen (13) zu entfernen,
der Endeffektor der Pick-und-Place-Vorrichtung (17) über dem Vakuumtisch oder der Legefläche (18) positioniert werden und der Endeffektor der Pick-und-Place-Vorrichtung (17) abgesenkt werden kann, um die Faserbündel (24) in Berührung mit einer vorher gelegten Schicht auf dem Vakuumtisch oder der Legefläche (18) zu platzieren, und
der Endeffektor der Pick-und-Place-Vorrichtung (17) deaktiviert und zurückgezogen werden kann, sodass die Faserbündel (24) oben auf der vorher gelegten Schicht auf dem Vakuumtisch oder der Legefläche (18) in ihrer Position zurückgelassen werden können.

10. Faserplatzierungssystem nach Anspruch 9, wobei das Faserplatzierungssystem eine Faserplatzierungszelle (1) ist.

11. Faserplatzierungssystem nach einem der Ansprüche 9 bis 10, wobei der Endeffektor ein vakuumbetriebener Greifer (21) ist.

12. Faserplatzierungssystem nach einem der Ansprüche 9 bis 11, wobei die beweglichen Führungswannen (13) unabhängig voneinander in eine eigenständige Endstellung geführt werden können, so dass die Enden eines jeden Faserbündels (24) in einer durchgängigen Beziehung zueinander ausgerichtet werden können, so wie sie in dem zu produzierenden Bauteil enthalten sein sollen.

13. Faserplatzierungssystem nach einem der Ansprüche 9 bis 12, wobei zwischen den beweglichen Führungswannen (13) ein Abstand zueinander ausgebildet ist, der ungefähr dem zweifachen der Breite des im System eingesetzten Materials entspricht.

14. Faserplatzierungssystem nach einem der Ansprüche 9 bis 13, wobei die Schneidevorrichtung (10) eingerichtet ist, die Materialenden in einem Winkel oder Bogen zu schneiden.

15. Faserplatzierungssystem nach einem der Ansprüche 9 bis 14, wobei die Pick-und-Place-Vorrichtung (17) mit einem Werkzeugwechsler ausgestattet ist, welche es erlaubt, verschiedene Endeffektor zu befestigen, insbesondere einen spezialisierten vakuumbetriebenen Greifer zum Platzieren bestimmter Lagetypen und/oder zum Platzieren einer Lage auf bestimmten Bauteilbereiche, insbesondere einen Bereich, der keine durchgehende Dichte aufweist,
einen Greifer zum Entfernen des Bauteil von der Werkzeugoberfläche entfernt,
einen Greifer zum Legen eines Trägermaterials auf den Vakuumtisch oder die Legefläche (18),
einen Greifer zum Platzieren von Einsatzstücken oder anderen Materialien, ein Prüfsystem zum Prüfen jeder Schicht für die Qualitätssicherung, und/oder einen Kompaktierungsrahmen, der über das Bauteil und das angelegte Vakuum platziert werden kann, um das Bauteil zusammenzudrücken und den Lufteinschluss zu entfernen.

16. Faserplatzierungssystem nach einem der Ansprüche 9 bis 15, wobei die Materiallagereinhausung (2) weiter mit einer Kühlanlage ausgestattet ist, um die Materialspulen (4) auf einer vorgegebenen Temperatur und Feuchtigkeit zu halten.

17. Faserplatzierungssystem nach einem der Ansprüche 9 bis 16, wobei die Materialübertragungsstation (12) weiter zur Bewegung jeder der bewegliche Führungswanne (13) einen jeweiligen servogesteuerten Schubantrieb (15) aufweist.

18. Faserplatzierungssystem nach einem der Ansprüche 9 bis 17, wobei das Faserplatzierungssystem eingerichtet ist, das Verfahren nach einem der Ansprüche 1 bis 8 auszuführen.

## Claims

1. A method for producing composite components by using a fibre placement system, comprising:
at least one material storage enclosure (2), having at least one material reel (4) for each fibre bundle (24) to be produced per layer, a rotatable swing roller (5) and a deflecting roller (7);
at least one material feed station (8), having a squeezing-roller drive system (9) and a cutting apparatus (10);
at least one material transfer station (12), which comprises for each fibre bundle (24) to be produced per layer a respective movable guide trough (13), wherein the movable guide troughs (13) each comprise a vacuum system, and
at least one laying station (16), having a vacuum table or laying surface (18) and a pick-and-place apparatus (17) fitted with an end effector;
wherein the method comprises the following steps:
activating the squeezing-roller drive system (9) in order to draw each of the material webs (22) through the respective swing rollers (5) and deflecting rollers (7), wherein, by drawing each of the material webs (22) from their respective material reel (4) through the squeezing-roller drive system (9), each of the material webs (22) is guided in the forward direction beyond the cutting apparatus (10) and into its respective guide trough (13) of the material feed station (8),
after each material web (22) has been guided over the desired section to its respective guide trough (13), activation of the vacuum system of the respective guide trough (13) for fixing the material web (22),
after fixing each material web (22) in its respective movable guide trough (13), actuation of the cutting apparatus (10) in order to sever the respective material web (22) from the material supplied by the material delivery reels and to produce individual fibre bundles (24),
when each fibre bundle (24) is fixed in its respective movable guide trough (13), moving the movable guide troughs (13) horizontally in the direction away from the cutting apparatus (10) so that all fibre bundles (24) are accessible to the pick-and-place apparatus (17),
rotating of the end effector of the pick-and-place apparatus (17) in alignment with the movable guide troughs (13);
lowering of the end effector until contact with the fibre bundles (24) is established;
activation of the end effector;
deactivation of the vacuum system in the movable guide troughs (13);
retraction of the end effector of the pick-and-place apparatus (17) in order to remove the fibre bundles (24) from the movable guide troughs (13);
positioning of the end effector of the pick-and-place apparatus (17) over the vacuum table or the laying surface (18);
lowering of the end effector of the pick-and-place apparatus (17) in order to position the fibre bundles (24) in contact with a previously laid layer on the vacuum table or the laying surface (18), and
deactivation of the end effector of the pick-and-place apparatus (17) and retraction of the end effector of the pick-and-place apparatus (17) so that fibre bundles (24) on top of the previously laid layer remain on the vacuum table or the laying surface (18) in their position.

2. A method according to claim 1, wherein the end effector is a vacuum-operated gripper (21), and wherein the vacuum is activated or deactivated for activating or deactivating the end effector.

3. A method according to one of the claims 1 or 2, wherein after the lowering of the end effector of the pick-and-place apparatus (17) and in order to position the fibre bundles (24) in contact with a previously laid layer on the vacuum table or the laying surface (18), the pick-and-place apparatus (17) exerts a downwardly directed force in order to press the fibre bundles (24) against the previously laid layer on the vacuum table or the laying surface (18).

4. A method according to one of the claims 1 to 3, wherein, with the drawing of each of the material webs (22) from their respective material reel (4) through the squeezing-roller drive system (9), the material webs (22) are each drawn independently from each other and each of the material webs (22) is guided over a section into their respective guide trough (13), which section corresponds to a fibre bundle length predetermined by the laying programme of the component.

5. A method according to one of the claims 1 to 4, wherein the laying station (16) further comprises a heating device (19), and wherein the method further comprises the following steps:
while the pick-and-place apparatus (17) is in position above the movable guide troughs (13), positioning of the heating device (19) above the vacuum table or the laying surface (18), and activating the heating device (19) in order to heat and make adhesive the
surface of the previously laid material layer on the vacuum table or the laying surface (18); and
after the surface of the previously laid layer has been heated and made adhesive, retraction of the heating device (19) from its position above the vacuum table or the laying surface (18) before the vacuum-operated gripper (21) of the pick-and-place apparatus (17) is positioned above the vacuum table or the laying surface (18).

6. A method according to one of the claims 1 to 5, wherein, during the movement of the movable guide troughs (13) horizontally in the direction away from the cutting apparatus (10), each movable guide trough (13) is independently guided to its separate end position so that the ends of each fibre bundle (24) are oriented in continuous relation with respect to each other, in the manner as to be contained in the component to be produced.

7. A method according to one of the claims 1 to 6, wherein for at least one material layer to be laid the fibre bundles (24) are spaced in lateral position from the adjoining fibre bundles (24) at a distance which corresponds to the width of a single fibre bundle, and wherein the gaps between the fibre bundles (24) are filled by laying fibre bundles (24) in the next layer to be laid.

8. A method according to one of the claims 1 to 7, wherein the following steps are carried out for a first material layer to be laid:
laying of a carrier material, especially a carrier film, on the surface of the vacuum table or the laying surface (18), and activation of the vacuum system for fixing the carrier material;
making adhesive the surface of the carrier material in preparation for receiving the first material layer;
rotating the end effector of the pick-and-place apparatus (17) in alignment with the movable guide troughs (13);
lowering of the end effector until contact with the fibre bundles (24) is established; activation of the end effector;
deactivation of the vacuum system in the movable guide troughs (13);
retraction of the end effector of the pick-and-place apparatus (17) in order to remove the fibre bundles (24) from the movable guide troughs (13);
positioning of the end effector of the pick-and-place apparatus (17) above the vacuum table or the laying surface (18);
lowering of the end effector of the pick-and-place apparatus (17) in order to position the fibre bundle (24) in contact with the carrier material on the vacuum table or the laying surface (18);
exerting a downwardly directed force by the pick-and-place apparatus (17) in order to press the fibre bundles (24) against the carrier material on the vacuum table or the laying surface (18);
deactivation of the end effector of the pick-and-place apparatus (17) and retraction of the end effector of the pick-and-place apparatus (17) so that the fibre bundles (24) remain on the carrier material on the vacuum table or the laying surface (18); and
repetition of the steps until the first layer is completed.

9. A fibre placement system, comprising:
at least one material storage enclosure (2) which comprises a material reel (4) for each fibre bundle (24) to be produced per layer, a rotatable swing roller (5) and a deflecting roller (7);
at least one material feed station (8) which comprises a squeezing-roller drive system (9) and a cutting apparatus (10);
at least one material transfer station (12), which comprises for each fibre bundle (24) to be produced per layer a respective movable guide trough (13), wherein the movable guide troughs (13) each comprise a vacuum system, and
at least one laying station (16), having a vacuum table or laying surface (18) and a pick-and-place apparatus (17) fitted with an end effector, wherein
the squeezing-roller drive system (9) can be activated in order to draw each of the material webs (22) through the respective swing rollers (5) and deflecting rollers (7), and to thus guide each of the material webs (22) in the forward direction beyond the cutting apparatus (10) and to its respective guide trough (13) of the material feed station (8),
the vacuum system of the respective guide troughs (13) can be activated for fixing the material web (22) in its respective movable guide trough (13),
the cutting apparatus (10) can be actuated in order to sever the respective material web (22) from the material supplied by the material delivery reels and to produce individual fibre bundles (24),
the movable guide troughs (13) can be moved horizontally in the direction away from the cutting apparatus (10) in order to make all fibre bundles (24) accessible to the pick-and-place apparatus (17),
the end effectors of the pick-and-place apparatus (17) are rotated in alignment with the movable guide troughs (13), the end effectors are lowered until touching the fibre bundles (24) and the end effector can be activated,
the vacuum system is deactivated in the movable guide troughs (13) and the end effector of the pick-and-place apparatus (17) can be retracted in order to remove the fibre bundles (24) from the movable guide troughs (13);
the end effector of the pick-and-place apparatus (17) is positioned over the vacuum table or the laying surface (18) and the end effector of the pick-and-place apparatus (17) can be lowered in order to position the fibre bundles (24) in contact with a previously laid layer on the vacuum table or the laying surface (18), and
the end effector of the pick-and-place apparatus (17) can be deactivated and retracted so that fibre bundles (24) on top of the previously laid layer can remain on the vacuum table or the laying surface (18) in their position.

10. A fibre placement system according to claim 9, wherein the fibre placement system is a fibre placement cell (1).

11. A fibre placement system according to one of the claims 9 to 10, wherein the end effector is a vacuum-operated gripper (21).

12. A fibre placement system according to one of the claims 9 to 11, wherein the movable guide troughs (13) can be guided independently of each other to a separate end position, so that the ends of each fibre bundle (24) can be oriented in continuous relationship with respect to each other, as are to be contained in the component to be produced.

13. A fibre placement system according to one of the claims 9 to 12, wherein a distance is formed with respect to each other between the movable guide troughs (13), which distance corresponds approximately to twice the width of the material used in the system.

14. A fibre placement system according to one of the claims 9 to 13, wherein the cutting apparatus (10) is designed to cut the material ends at an angle or in a curve.

15. A fibre placement system according to one of the claims 9 to 14, wherein the pick-and-place apparatus (17) is fitted with a tool changer, which allows fastening different end effectors, especially a specialised vacuum-operated gripper for placing specific types of layers and/or for placing a layer on specific component regions, especially a region which has no continuous density,
a gripper for removing the component from the surface,
a gripper for laying a carrier material on the vacuum table or the laying surface (18), a gripper for placing insert pieces or other materials,
a testing system for testing each layer for quality control, and/or a compacting frame which can be positioned above the component and the applied vacuum in order to compress the component and to remove entrapped air.

16. A fibre placement system according to one of the claims 9 to 15, wherein the material storage enclosure (2) is further fitted with a cooling system in order to keep the material reels (4) at a predetermined temperature and humidity.

17. A fibre placement system according to one of the claims 9 to 16, wherein the material transfer station (12) comprises a respective servo-controlled thrust drive (15) for moving each of the movable guide troughs (13).

18. A fibre placement system according to one of the claims 9 to 17, wherein the fibre placement system is designed to carry out a method according to one of the claims 1 to 8.

## Revendications

1. Procédé pour la fabrication de pièces composites au moyen d'un système de placement de fibres, comprenant:
au moins un magasin de matériau (2) qui comprend, pour chaque faisceau de fibres (24) à produire pour chaque couche, au moins une bobine de matériau (4), un cylindre pivotant rotatif (5) et un cylindre de renvoi (7);
au moins un poste d'alimentation en matériau (8) qui comprend un système d'entraînement à rouleaux pinceurs (9) et un dispositif de coupe (10) ;
au moins un poste de transfert de matériau (12) comprenant, pour chaque faisceau de fibres (24) à produire pour chaque couche, une auge de guidage mobile (13), les auges de guidage mobiles (13) présentant chacune un système de vide ; et
au moins un poste de couchage (16) qui comprend une table à vide ou une surface de couchage (18) et un dispositif à bras de transfert (17) équipé d'un organe terminal effecteur ;
lequel procédé comprend les étapes suivantes :
activation du système d'entraînement à rouleaux pinceurs (9) pour tirer chacun des lés de matériau (22) à travers ses cylindres pivotants (5) et cylindres de renvoi (7) correspondants,
la traction sur chacun des lés de matériau (22) depuis sa bobine de matériau (4) par le système d'entraînement à rouleaux pinceurs (9) faisant avancer chaque lé de matériau (22) au-delà du dispositif de coupe (10) et l'amenant dans l'auge de guidage (13) correspondante du poste d'alimentation en matériau (8),
après que chaque lé de matériau (22) a été guidé sur la distance souhaitée par-dessus son auge de guidage (13), activation du système de vide de l'auge de guidage (13) pour fixer le lé de matériau (22),
après la fixation de chaque lé de matériau (22) dans son auge de guidage mobile (13), actionnement du dispositif de coupe (10) pour séparer chaque lé de matériau (22) du matériau amené depuis les bobines d'alimentation en matériau et créer des faisceaux de fibres (24) séparés,
quand chaque faisceau de fibres (24) est fixé dans son auge de guidage mobile (13), déplacement des auges de guidage mobiles (13) à l'horizontale pour les éloigner du dispositif de coupe (10), de sorte que tous les faisceaux de fibres (24) soient accessibles au dispositif à bras de transfert (17),
rotation de l'organe terminal effecteur du dispositif à bras de transfert (17) en alignement avec les auges de guidage mobiles (13);
abaissement de l'organe terminal effecteur jusqu'au contact avec les faisceaux de fibres (24) ;
activation de l'organe terminal effecteur ;
désactivation du système de vide dans les auges de guidage mobiles (13) ;
rétraction de l'organe terminal effecteur du dispositif à bras de transfert (17) afin d'éloigner les faisceaux de fibres (24) des auges de guidage mobiles (13) ;
positionnement de l'organe terminal effecteur du dispositif à bras de transfert (17) au-dessus de la table à vide ou de la surface de couchage (18) ;
abaissement de l'organe terminal effecteur du dispositif à bras de transfert (17) pour placer les faisceaux de fibres (24) en contact avec une couche précédemment posée sur la table à vide ou la surface de couchage (18) ; et
désactivation de l'organe terminal effecteur du dispositif à bras de transfert (17) et rétraction de l'organe terminal effecteur du dispositif à bras de transfert (17) de telle sorte que les faisceaux de fibres (24) restent dans leur position par-dessus la couche précédemment posée sur la table à vide ou la surface de couchage (18).

2. Procédé selon la revendication 1, dans lequel l'organe terminal effecteur est une pince actionnée par le vide (21) et dans lequel le vide est activé et désactivé pour activer et désactiver l'organe terminal effecteur.

3. Procédé selon l'une des revendications 1 ou 2 dans lequel, après l'abaissement de l'organe terminal effecteur du dispositif à bras de transfert (17) pour placer les faisceaux de fibres (24) en contact avec une couche précédemment posée sur la table à vide ou la surface de couchage (18), le dispositif à bras de transfert (17) exerce une force dirigée vers le bas pour presser les faisceaux de fibres (24) contre la couche posée précédemment sur la table à vide ou la surface de couchage (18).

4. Procédé selon l'une des revendications 1 à 3 dans lequel, quand chacun des lés de matériau (22) est tiré de sa bobine de matériau (4) par le système d'entraînement à rouleaux pinceurs (9), les lés de matériau (22) sont tirés chacun indépendamment des autres et chacun des lés de matériau (22) est guidé sur une distance dans son auge de guidage (13) qui correspond à une longueur de faisceau de fibres prédéfinie dans le programme de couchage de la pièce.

5. Procédé selon l'une des revendications 1 à 4, dans lequel le poste de couchage (16) comprend en outre un appareil de chauffage (19) et qui comprend en outre les étapes suivantes :
pendant que le dispositif à bras de transfert (17) se trouve en position au-dessus des auges de guidage mobiles (13), positionnement de l'appareil de chauffage (19) au-dessus de la table à vide ou de la surface de couchage (18) et allumage de l'appareil de chauffage (19) pour chauffer la surface de la couche de matériau posée précédemment sur la table à vide ou la surface de couchage (18) et la rendre collante ; et
après que la surface de la couche posée précédemment a été chauffée et rendue collante, retrait de l'appareil de chauffage (19) de sa position au-dessus de la table à vide ou de la surface de couchage (18) avant que la pince actionnée par le vide (21) du dispositif à bras de transfert (17) soit positionnée au-dessus de la table à vide ou de la surface de couchage (18).

6. Procédé selon l'une des revendications 1 à 5 dans lequel, lors du déplacement des auges de guidage mobiles (13) horizontalement dans une direction qui les éloigne du dispositif de coupe (10), chaque auge de guidage mobile (13) est guidée indépendamment dans une position de fin de course séparée, de sorte que les extrémités de chaque faisceau de fibres (24) sont orientées les unes par rapport aux autres dans une relation de continuité, telles qu'elles doivent être contenues dans la pièce à produire.

7. Procédé selon l'une des revendications 1 à 6 dans lequel, pour au moins une couche de matériau à poser, les faisceaux de fibres (24) sont écartés latéralement des faisceaux de fibres (24) limitrophes d'une distance correspondant à la largeur d'un seul faisceau de fibres et dans lequel les lacunes entre les faisceaux de fibres (24) sont remplies avec des couches de faisceaux de fibres (24) d'une couche suivante à poser.

8. Procédé selon l'une des revendications 1 à 7 dans lequel, pour une première couche de matériau à poser, les étapes suivantes sont exécutées :
poser un matériau de support, en particulier d'une feuille de support, sur la surface de la table à vide ou de la surface de couchage (18) et activation du système de vide pour fixer le matériau de support ;
rendre la surface du matériau de support collante pour préparer la réception de la première couche de matériau ;
faire tourner l'organe terminal effecteur du dispositif à bras de transfert (17) dans l'alignement des auges de guidage mobiles (13) ;
abaisser l'organe terminal effecteur jusqu'au contact avec les faisceaux de fibres (24) ;
activer l'organe terminal effecteur ;
désactiver le système de vide dans les auges de guidage mobiles (13) ;
rétracter l'organe terminal effecteur du dispositif à bras de transfert (17) pour éloigner les faisceaux de fibres (24) des auges de guidage mobiles (13) ;
positionner l'organe terminal effecteur du dispositif à bras de transfert (17) au-dessus de la table à vide ou de la surface de couchage (18) ;
abaisser l'organe terminal effecteur du dispositif à bras de transfert (17) afin de placer les faisceaux de fibres (24) en contact avec le matériau de support sur la table à vide ou la surface de couchage (18) ;
exercer une force dirigée vers le bas à l'aide du dispositif à bras de transfert (17) pour presser les faisceaux de fibres (24) contre le matériau de support sur la table à vide ou la surface de couchage (18) ;
désactiver l'organe terminal effecteur du dispositif à bras de transfert (17) et rétracter l'organe terminal effecteur du dispositif à bras de transfert (17) de telle sorte que les faisceaux de fibres (24) restent en arrière sur le matériau de support sur la table à vide ou la surface de couchage (18) ; et
répéter les étapes jusqu'à ce que la première couche soit finie.

9. Système de placement de fibres comprenant :
au moins un magasin de matériau (2) qui comprend, pour chaque faisceau de fibres (24) à produire pour chaque couche, au moins une bobine de matériau (4), un cylindre pivotant rotatif (5) et un cylindre de renvoi (7) ;
au moins un poste d'alimentation en matériau (8) qui comprend un système d'entraînement à rouleaux pinceurs (9) et un dispositif de coupe (10) et ;
au moins un poste de transfert de matériau (12) comprenant, pour chaque faisceau de fibres (24) à produire pour chaque couche, une auge de guidage mobile (13), les auges de guidage mobiles (13) présentant chacune un système de vide ; et
au moins un poste de couchage (16) qui comprend une table à vide ou une surface de couchage (18) et un dispositif à bras de transfert (17) équipé d'un organe terminal effecteur, dans lequel
le système d'entraînement à rouleaux pinceurs (9) peut être activé pour tirer chacun des der lés de matériau (22) à travers ses cylindres pivotants (5) et ses cylindres de renvoi (7) et faire avancer chacun des lés de matériau (22) au-delà du dispositif de coupe (10) et dans l'auge de guidage (13) correspondante du poste d'alimentation en matériau (8),
le système de vide de chacune des auges de guidage (13) peut être activé pour fixer le lé de matériau (22) dans l'auge de guidage mobile (13) correspondante,
le dispositif de coupe (10) peut être actionné pour séparer chaque lé de matériau (22) du matériau amené à partir des bobines d'alimentation en matériau et produire des faisceaux de fibres (24) séparés,
les auges de guidage mobiles (13) peuvent être déplacées horizontalement dans une direction qui les éloigne du dispositif de coupe (10), afin de mettre tous les faisceaux de fibres (24) à la portée du dispositif à bras de transfert (17),
l'organe terminal effecteur du dispositif à bras de transfert (17) peut être tourné dans l'alignement des auges de guidage mobiles (13), l'organe terminal effecteur peut être abaissé jusqu'au contact avec les faisceaux de fibres (24) et l'organe terminal effecteur peut être activé,
le système de vide dans les auges de guidage mobiles (13) peut être désactivé et l'organe terminal effecteur du dispositif à bras de transfert (17) rétracté afin de retirer les faisceaux de fibres (24) des auges de guidage mobiles (13),
l'organe terminal effecteur du dispositif à bras de transfert (17) peut être positionné au-dessus de la table à vide ou de la surface de couchage (18) et l'organe terminal effecteur du dispositif à bras de transfert (17) peut être abaissé pour placer les faisceaux de fibres (24) en contact avec une couche précédemment posée sur la table à vide ou la surface de couchage (18), et
l'organe terminal effecteur du dispositif à bras de transfert (17) peut être désactivé et rétracté de façon à pouvoir laisser les faisceaux de fibres (24) dans leur position par-dessus la couche posée précédemment sur la table à vide ou la surface de couchage (18).

10. Système de placement de fibres selon la revendication 9, dans lequel le système de placement de fibres est une cellule de placement de fibres (1).

11. Système de placement de fibres selon l'une des revendications 9 à 10, dans lequel l'organe terminal effecteur est une pince actionnée par le vide (21).

12. Système de placement de fibres selon l'une des revendications 9 à 11, dans lequel les auges de guidage mobiles (13) peuvent être amenées indépendamment les unes des autres dans une position de fin de course séparée, de sorte que les extrémités de chaque faisceau de fibres (24) sont orientées les unes par rapport aux autres dans une relation de continuité, telles qu'elles doivent être contenues dans la pièce à produire.

13. Système de placement de fibres selon l'une des revendications 9 à 12, dans lequel est formé entre les auges de guidage mobiles (13) un écartement entre celles-ci qui correspond approximativement au double de la largeur du matériau mis en oeuvre dans le système.

14. Système de placement de fibres selon l'une des revendications 9 à 13, dans lequel le dispositif de coupe (10) est disposé pour couper les extrémités du matériau en angle ou en courbe.

15. Système de placement de fibres selon l'une des revendications 9 à 14, dans lequel le dispositif à bras de transfert (17) est équipé d'un changeur d'outil qui permet de fixer différents effecteurs finaux, en particulier une pince actionnée par le vide spécialisée pour le placement de certains types de couches et/ou pour le placement d'une couche sur certaines parties de la pièce, en particulier une zone qui ne présente pas une densité continue,
une pince pour éloigner la pièce de la surface de l'outil,
une pince pour poser un matériau de support sur la table à vide ou la surface de couchage (18),
une pince pour placer des inserts ou d'autres matériaux,
un système de contrôle pour le contrôle de chaque couche aux fins d'assurance qualité, et/ou
un cadre de compactage qui peut être placé par-dessus la pièce et le vide appliqué pour comprimer la pièce et éliminer les inclusions d'air.

16. Système de placement de fibres selon l'une des revendications 9 à 15, dans lequel le magasin de matériau (2) est équipé en outre d'une installation de refroidissement afin de maintenir les bobines de matériau (4) à une température et une humidité prédéterminées.

17. Système de placement de fibres selon l'une des revendications 9 à 16, dans lequel le poste de transfert de matériau (12) présente en outre, pour le déplacement de chacune des auges de guidage mobiles (13), un servomoteur d'entraînement en poussée (15).

18. Système de placement de fibres selon l'une des revendications 9 à 17, dans lequel le système de placement de fibres est aménagé pour exécuter le procédé selon l'une des revendications 1 à 8.
